# EUROPÄISCHE PATENTANMELDUNG

(11) **EP 1 207 322 A1**
(43) Veröffentlichungstag der Anmeldung: **22.05.2002**
(21) Anmeldenummer: 00125193.3
(22) Anmeldetag: 18.11.2000
(51) Int. Cl.: F16J 9/20

(54) **Ölabstreifkolbenring**

(71) Anmelder: Federal-Mogul Burscheid GmbH, 51399 Burscheid (DE)
(72) Erfinder: Mader, Heiner Christian, 51399 Burscheid (DE)

(57) **Zusammenfassung**

Die Erfindung betrifft einen Ölabstreifkolbenring aus Gußeisen mit mindestens zwei auf der äußeren Umfangsfläche angeordneten Laufstegen 1,1' zwischen denen sich Öldurchflußöffnungen in Form von Rundlöchern 3' und Langlöchern 3" erstrecken. Rund- und Langlöcher 3', 3" sind nur in Kombination vorgesehen, wobei die Langlöcher sich vorzugsweise im Bereich α 40° erstrecken.

## Beschreibung

Die Erfindung betrifft einen Ölabstreifkolbenring aus Gußeisen für Verbrennungskraftmaschinen mit mindestens zwei auf der äußeren Umfangsfläche angeordneten Laufstegen und in Umfangsrichtung axial zwischen den Laufstegen angeordneten Öldurchflußöffnungen, die sich radial von der äußeren Umfangsfläche zur inneren Umfangsfläche erstrecken.

Zur Rückführung des von der Zylinderwand abgestreiften Öles in den Kurbelwellenraum bei Verbrennungskraftmaschinen, sind bei Ölabstreifkolbenringen Öldurchflußöffnungen angeordnet. Bei aus profiliertem Stahlband hergestellten Kolbenringen können alle möglichen Konturen der Öldurchflußöffnungen auf einfache Art und Weise hergestellt werden, da in das Stahlband die Öldurchflußöffnungen eingestanzt werden können, bevor das Band zu einem Kolbenring verarbeitet wird. Die DE 3 603 690 C2 offenbart einen solchen Kolbenring. Aus dieser Schrift ist auch bereits das Problem zu entnehmen, das sich bei verschiedenen Lochgeometrien einstellt.

Aufgrund des geringen Verformungswiderstandes im Bereich der Ölabstreiflöcher mit entsprechend kleinem Flächenträgheitsmoment des Restquerschnittes des Stahlbandes, beult das Material beim Biegen in Ringform, im Bereich der Löcher aus. Die Lochgeometrie nimmt hierbei Einfluß auf die Stärke der Ausbeulung. Gemäß DE 3 603 690 wurde deshalb vorgeschlagen, elliptische oder rautenförmige Öldurchflußöffnungen zu verwenden.

Bei Ölabstreifkolbenringen aus Gußeisen stellt sich darüber hinaus das Problem, daß derartige Lochgeometrien nicht, oder nur schwer, herstellbar sind, da die Öldurchflußöffnungen nicht einstanzbar, sondern nur spanend herstellbar sind. Grundsätzlich stellt sich bei gegossenen Ölabstreifkolbenringen, wie sie beispielsweise aus der US 4 045 036 bekannt sind, aber das gleiche Problem. Motorhersteller müssen für den jeweiligen Motor das Optimum hinsichtlich Funktion und Kosten finden. Die Funktionsfähigkeit eines Ölabstreifkolbenringes ist u.a. abhängig von der Profilausbildung der Laufstege, den Öldurchflußöffnungenn, von der spezifischen Pressung, von der Rundheit der Laufstege und vom Formfüllvermögen des Ringes.

Hohes Formfüllvermögen bedeuted gute Anpassung des Kolbenringes an etwaige Verformungen und/oder Durchmesseränderungen des Zylinderrohres bei geringen Flächenpressungsunterschieden. Der Einfluß des Formfüllvermögens auf den Ölverbrauch ist z. B. deutlich bei Motoren mit höheren Zylinderverzügen festzustellen. Die Anforderungen an einen Ölabstreifkolbenring, insbesondere an sein Formfüllvermögen und seine spezifische Pressung wird sehr stark durch die jeweilige Motorkonstruktion bestimmt. Mit Kolbenringen aus Gußeisen können im allgemeinen alle Anforderungen an einen Ölabstreifring erfüllt werden. Die in der US 4 045 036 aufgeführten Öldurchflußöffnungen haben den Nachteil, daß im Bereich der Schlitze ein Ausbeulen des Materials eintritt und zwar, sowohl radial als auch axial. Bei Motoren mit hohen Zylinderverzügen sind derartige Ringe nicht zufriedenstellend. Rundlöcher, wie sie beispielsweise aus der DE PS 633 280 bekannt sind, haben den Nachteil, daß sie kleine Einzeldurchtrittsöffnungen und eine begrenzte Gesamtdurchtrittsöffnung aufweisen, so daß der Einsatz bei modernen, schnellaufenden Dieselmotoren nur bedingt möglich ist. Zudem können sich die kleinen Rundlöcher durch Rückstände aus dem Schmieröl leicht zusetzen.

Der Erfindung liegt die Aufgabe zugrunde, gattungsgemäße Ölabstreifkolbenringe im Hinblick auf ihr Formfüllvermögen und ihre Rundheit im auf Nenndurchmesser gespannten Zustand zu verbessern, wobei gleichzeitig eine hohe Gestaltfertigkeit angestrebt wird.

Diese Aufgabe wird erfindungsgemäß durch die kennzeichnenden Merkmale des Patentanspruch 1 gelöst.
Vorteilhafte Ausgestaltungen der Erfindung ergeben sich aus den Unteransprüchen.

Durch die Kombination verschiedener Lochgeometrien werden die Vorteile der einzelnen Konturen synergistisch zusammengefaßt. Insgesamt ergibt sich so ein Ölabstreifkolbenring mit reduzierten Ausbeulungen und erhöhter Gestaltfestigkeit. Gleichzeitig ist sichergestellt, daß die Gesamtdurchtrittsöffnung der Öldurchflußöffnungen groß genug ist, um eine sichere Funktion zu ermöglichen. Insgesamt ist ein Kolbenring geschaffen, der ein hohes Formfüllvermögen und eine gute Rundheit trotz großer Drainagequerschnitte aufweist. Die Lochgeometrien lassen sich auf einfache Weise spanend herstellen, so daß die Herstellungskosten günstig sind und sich somit ein gutes Preis - Leistungsverhältnis ergibt.

Vorzugsweise sind die Langlöcher in einem Bereich angeordnet, der im eingebauten Zustand nur eine begrenzte Biegespannung aufweist, wodurch die Ausbeulung minimiert ist.

Die Erfindung ist anhand eines Ausführungsbeispieles in der Zeichnung dargestellt und wird im folgenden näher erläutert.
Es zeigen:
- Fig. 1: Querschnitt eines erfindungsgemäßen Ölabstreifkolbenringes
- Fig. 2: Draufsicht auf den Ölabstreifkolbenring gem. Fig. 1.
- Fig. 3: Ansicht gemäß Linie III-III der Fig. 2.

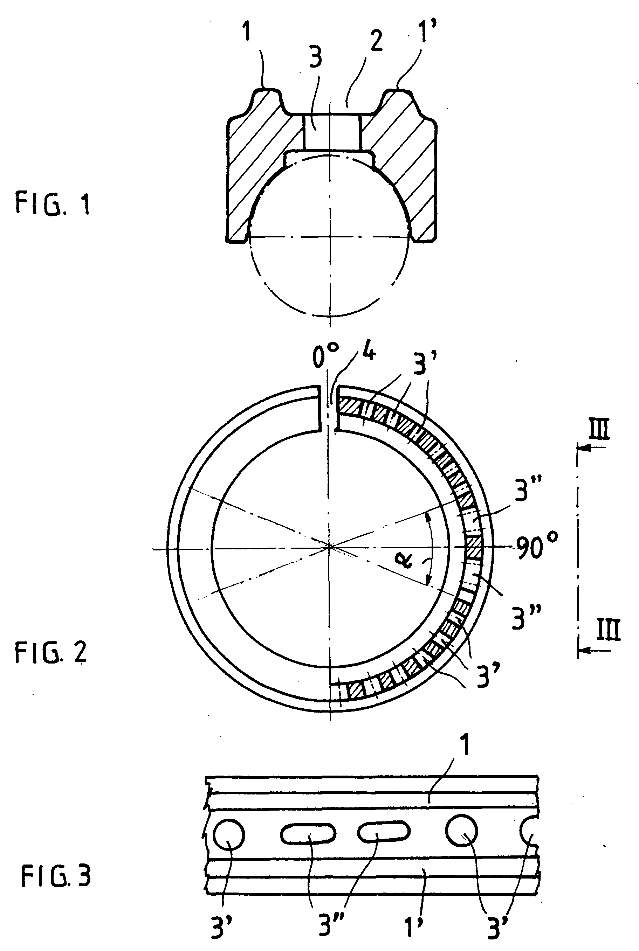

Die Figur 1 zeigt einen gegossenen Ölabstreifkolbenring mit zwei Laufstegen 1, 1' und einer in der äußeren Umfangsfläche umlaufenden Nut 2, in deren Bereich Öldurchflußöffnungen 3 angeordnet sind. Die Öldurchflußöffnungen 3 erstrecken sich radial von der äußeren Umfangsfläche zur inneren Umfangsfläche.

Aus der Figur 2 ist die Lage der Öldurchflußöffnungen erkennbar.

In der Figur 3 sind die Konturen der Öldurchflußöffnungen dargestellt. Die Öldurchffußöffnungen bestehen aus einer Kombination von Rundlöchern 3' und Langlöchern 3". Die Langlöcher 3" erstrecken sich vorzugsweise im Bereich jeweils 90° versetzt zum Stoß 4 und zwar im Winkelbereich α = 40°.

Je nach Anwendungsfall kann die Anzahl der Rundlöcher und Langlöcher variieren. Für einen Ölabstreifkolbenring mit einem Durchmesser von 90 mm können beispielsweise vier Langlöcher 3" mit einer Länge von 10,5 ± 2,5 mm ausreichen, die mit 24 Rundlöchern 3' kombiniert werden.

## Patentansprüche

1. Ölabstreifkolbenring aus Gußeisen für Verbrennungskraftmaschinen mit mindestens zwei auf der äußeren Umfangsfläche angeordneten Laufstegen und in Umfangsrichtung axial zwischen den Laufstegen angeordneten Öldurchflußöffnungen, die sich radial von der äußeren Umfangsfläche zur inneren Umfangsfläche erstrecken und **dadurch gekennzeichnet, daß** die Öldurchflußöffnungen (3) aus einer Kombination einzelner, separater Rund- (3) und Langlöchern (3") bestehen, die in definierten Abstand zueinander angeordnet sind, wobei die größerer Erstreckung der Langlöcher (3") in Umfangsrichtung verläuft.

2. Ölabstreifkolbenring nach Anspruch 1, **dadurch gekennzeichnet, daß** die Langlöcher (3") sich jeweils vom Stoß (4) des Kolbenringes gesehen um 90° versetzt in einem Winkelbereich von α (Alpha) = 40° erstrecken.

3. Ölabstreifkolbenring nach Anspruch 1 und 2, **dadurch gekennzeichnet, daß** die Öldurchflußöffnungen (3,3',3") spiegelsymmetrisch zur Achse zwischen Stoß (4) und dem Stoß (4) gegenüberliegenden Ringrücken angeordnet sind.

4. Ölabstreifkolbenring nach Anspruch 3, **dadurch gekennzeichnet, daß** die Langlöcher (3") eine Länge aufweisen die bis zum fünffachen Rundlochdurchmesser ausgebildet ist.
